# EUROPÄISCHE PATENTSCHRIFT

(11) **EP 1 882 541 B1**
(45) Veröffentlichungstag und Bekanntmachung des Hinweises auf die Patenterteilung: **09.12.2009**
(21) Anmeldenummer: 07012863.2
(22) Anmeldetag: 30.06.2007
(51) Int. Cl.: B23K 9/067

(54) **Impulsgenerator einer elektrischen Schweissstromquelle**
Pulse generator for an electric welding current supply
Générateur d'impulsions pour une source de courant électrique de soudage

(30) Priorität: 28.07.2006 DE 102006035752
(43) Veröffentlichungstag der Anmeldung: 30.01.2008
(73) Patentinhaber: Lorch Schweisstechnik GmbH, 71549 Auenwald (DE)
(72) Erfinder: Jaeschke, Birger, Dr., 71522 Backnang (DE)
(74) Vertreter: Hoeger, Stellrecht & Partner Patentanwälte

(56) Entgegenhaltungen:
- EP-A2- 1 197 285
- DE-A1- 3 011 127
- DE-A1- 19 844 273

## Beschreibung

Die Erfindung betrifft einen Impulsgenerator einer elektrischen Schweißstromquelle, insbesondere zum WIG-Schweißen, mit einer Zündkapazität, die zur Aufladung über eine Ladeschaltung mit einer Gleichstromquelle verbindbar und über eine Entladeschaltung, in der die Zündkapazität elektrisch in Reihe zur Primärseite eines sekundärseitig in den Schweißstromkreis der Schweißstromquelle eingebundenen Impulsübertragers liegt, entladbar ist.

Beim WIG-Schweißen muss der Lichtbogen zwischen Werkstück und Schweißelektrode ohne Berührung zwischen Werkstück und Elektrode gezündet werden. Zu diesem Zweck ist es bekannt, zwischen Elektrode und Werkstück einen Zündimpuls mit hoher elektrischer Spannung anzulegen. Durch den Zündimpuls wird eine Ionisierung des Luftweges zwischen Schweißelektrode und Werkstück erreicht, mit der Folge, dass ein Lichtbogen gezündet wird, der dann durch den Schweißstrom, welcher das am Lichtbogenweg erzeugte Plasma durchsetzt, aufrecht erhalten wird.

In Abhängigkeit vom Material des jeweiligen Werkstückes erfolgt das WIG-Schweißen mit Gleich- oder Wechselstrom. Im letzteren Fall ist es erwünscht, Impulse mit unterschiedlicher Polarität erzeugen zu können, um den für den Schweißprozess notwendigen Lichtbogen in allen Phasen des Schweißwechselstroms durch (zusätzliche) Zündimpulse stabilisieren zu können.

Zu diesem Zweck ist es aus der DE 30 11 127 A1 bekannt, einen Impulsübertrager mit zweiteiliger Primärwicklung vorzusehen, wobei die beiden zueinander parallelgeschalteten Primärwicklungsteile in Reihe zur Zündkapazität und in Reihe zu jeweils einem zugeordneten Halbleiterschalter geschaltet sind.

Indem nun entweder der dem einen Primärwicklungsteil zugeordnete Halbleiterschalter oder der dem anderen Primärwicklungsteil zugeordnete Halbleiterschalter zur Erzeugung eines Zündimpulses geschlossen wird, durchsetzt der Entladestrom der Zündkapazität entweder den einen oder anderen Primärwicklungsteil, so dass auf die Sekundärwicklung des Zündübertragers ein Impuls der einen oder anderen Polarität induziert wird. Nachteilig bei dieser Anordnung ist die Tatsache, dass der jeweils unbestromte Primärwicklungsteil zwangsläufig zu induktiven Verlusten im Impulsübertrager führt, zumal jeder Primärwicklungsteil parallel zu einem Dämpfungswiderstand geschaltet ist.

Ein prinzipiell gleichartiger Impulsübertrager mit zweiteiliger Primärwicklung wird in der DE 30 15 095 A1 beschrieben.

Gemäß der DE 198 44 273 A1, welche einen Impulsgenerator nach dem Oberbegriff des Anspruchs 1 offenbart, kann die Primärwicklung des Impulsübertragers in einer H-Schaltung angeordnet sein (siehe auch EP-A-1 197 285), die zwei zur Zündkapazität parallele Reihenschaltungen mit je zwei Halbleiterschaltern aufweist, wobei die Primärwicklung des Impulsübertragers jeweils zwischen den Halbleiterschaltern der beiden Reihenschaltungen angeschlossen ist. Indem nun entweder der eine Halbleiterschalter der einen Reihenschaltung und der andere Halbleiterschalter der anderen Reihenschaltung oder der andere Halbleiterschalter der einen Reihenschaltung und der eine Halbleiterschalter der anderen Reihenschaltung synchron geschlossen werden, wird der damit eingeschaltete Entladestrom der Zündkapazität in der einen oder anderen Richtung durch die Primärseite des Impulsübertragers geleitet. Dementsprechend hat der die Primärseite des Impulsübertragers durchsetzende elektrische Entladestrom der Zündkapazität entweder die eine oder die andere Polarität, mit der Folge, dass auf die Sekundärseite des Zündübertragers ein Impuls mit der einen oder anderen Polarität induziert wird. Nachteilig bei dieser Anordnung ist die Tatsache, dass Halbleiterschalter, insbesondere die hier typischerweise eingesetzten Thyristonen regelmäßig kein exakt gleichartiges Schaltverhalten haben, so dass die jeweils zwei für die Erzeugung eines Zündimpulses zu schließenden Halbleiterschalter nicht exakt simultan betätigt werden können. Dementsprechend ist der Zeitpunkt der Auslösung der Zündimpulse nicht exakt reproduzierbar.

Aufgabe der Erfindung ist es nun, einen Impulsgenerator zu schaffen, der sich einerseits durch exakt reproduzierbares Schaltverhalten und andererseits dadurch auszeichnet, dass je nach Bedarf Zündimpulse mit der einen oder anderen Polarität erzeugt werden können.

Diese Aufgabe wird erfindungsgemäß bei einem Impulsgenerator der eingangs angegebenen Art dadurch gelöst, dass in der Ladeschaltung angeordnete Schaltmittel die Polarität der Rufladung der Zündkapazität willkürlich vorzugeben gestatten und die Entladeschaltung den Entladestrom unabhängig von der Polarität der Aufladung der Zündkapazität jeweils in vorgegebener Durchlassrichtung über einen einzigen zur Auslösung des Entladestroms schließenden Halbleiterschalter führt.

Die Erfindung beruht auf dem allgemeinen Gedanken, Schaltmittel vorzusehen, mit denen die Polarität der Anschlüsse der Zündkapazität an die zu ihrer Ladung dienende Gleichstromquelle frei verändert werden kann. Des Weiteren ist vorgesehen, den Entladestrom jeweils über einen einzigen zur Auslösung des Ladestroms schließenden Halbleiterschalter zu führen, wobei die Entladeschaltung so ausgebildet ist, dass dieser Halbleiterschalter in vorgegebener Durchlassrichtung vom Entladestrom durchsetzt wird. Im Ergebnis genügt es also, das Schaltverhalten eines einzigen Halbleiterschalters bei der Ladespannung der Zündkapazität zu berücksichtigen, um eine exakt reproduzierbare Auslösung der Zündimpulse zu gewährleisten.

Die Erfindung bietet den Vorteil, dass der Impulsübertrager im statistischen Mittel für Zündimpulse mit alternierender Polarität verwendet wird. Damit kann der Impulsübertrager vergleichsweise klein dimensioniert sein und gleichwohl einen großen magnetischen Flussdichtehub erlauben. Jedenfalls führt die unvermeidliche magnetische Remanenz des Impulsübertragers zu keiner nennenswerten Minderung des Flussdichtehubes.

Gemäß einer ersten bevorzugten Ausführungsform der Erfindung kann die Entladeschaltung zwei zueinander parallele Halbleiterschalter mit zueinander antiparallelen Durchlassrichtungen aufweisen. Je nach Polarität der Aufladung der Zündkapazität wird dann entweder nur der eine oder nur der andere Halbleiterschalter geschlossen, d.h. in seinen leitenden Zustand gebracht.

Statt dessen ist es auch möglich und vorteilhaft, die Entladeschaltung als vierpolige Gleichrichterschaltung auszubilden, wobei die von der Zündkapazität und der Primärseite des Impulsübertragers gebildete Serienschaltung zwischen den Eingängen der Gleichrichterschaltung und der Halbleiterschalter zwischen den Ausgängen der Gleichrichterschaltung angeordnet sind. Hier wird also der den Entladestrom auslösende Halbleiterschalter immer in einer durch die Gleichrichterschaltung vorgegebenen Stromrichtung vom Entladestrom der Zündkapazität durchsetzt. Dabei ist es ohne weiteres möglich, den Halbleiterschalter mit seiner Durchlassrichtung entsprechend der Stromrichtung anzuordnen.

Die Ladeschaltung kann zweckmäßig als H-Brückenschaltung ausgebildet sein, wobei zwischen den Polen der Gleichspannungsquelle zwei parallele Reihenschaltungen mit je einem ersten und einem zweiten Halbleiterschalter angeordnet sind und die Zündkapazität an beide Reihenschaltungen jeweils zwischen den beiden Halbleiterschaltern angeschlossen ist.

Bei der Aufladung der Zündkapazität wird jeweils der erste Halbleiterschalter der einen Reihenschaltung und der zweite Halbleiterschalter der anderen Reihenschaltung geschlossen. Dabei hängt die Polarität der Aufladung davon ab, in welcher der beiden Reihenschaltungen der erste bzw. zweite Halbleiterschalter geschlossen wird. Zwar lassen sich mehrere Halbleiterschalter nicht ohne weiteres exakt simultan schalten, wie eingangs herausgestellt wurde, jedoch kommt es bei der Aufladung der Zündkapazität nicht auf ein exakt reproduzierbares Schaltverhalten der Schalter an, da die zur Aufladung benötigte Zeitspanne größenordnungsmäßig wesentlich länger als die Zeitdifferenz zwischen den Schaltpunkten der Halbleiterschalter ist und dementsprechend eine reproduzierbare Aufladung der Zündkapazität ohne weiteres erreicht werden kann.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher beschrieben werden.

Schutz wird nicht nur für ausdrücklich angegebene oder dargestellte Merkmalskombinationen sondern prinzipiell auch für beliebige Unterkombinationen der Merkmale beansprucht.

In der Zeichnung zeigt
- Fig. 1: einen Schaltplan einer ersten Ausführungsform des erfindungsgemäßen Impulsgenerators einer elektrischen Schweißstromquelle,
- Fig. 2: einen Schaltplan einer abgewandelten Ausführungsform,
- Fig. 3: eine Steuerschaltung des Impulsgenerators,
- Fig. 4: einen gegenüber Fig. 1 abgewandelten Schaltplan und
- Fig. 5: einen gegenüber Fig. 2 abgewandelten Schaltplan.

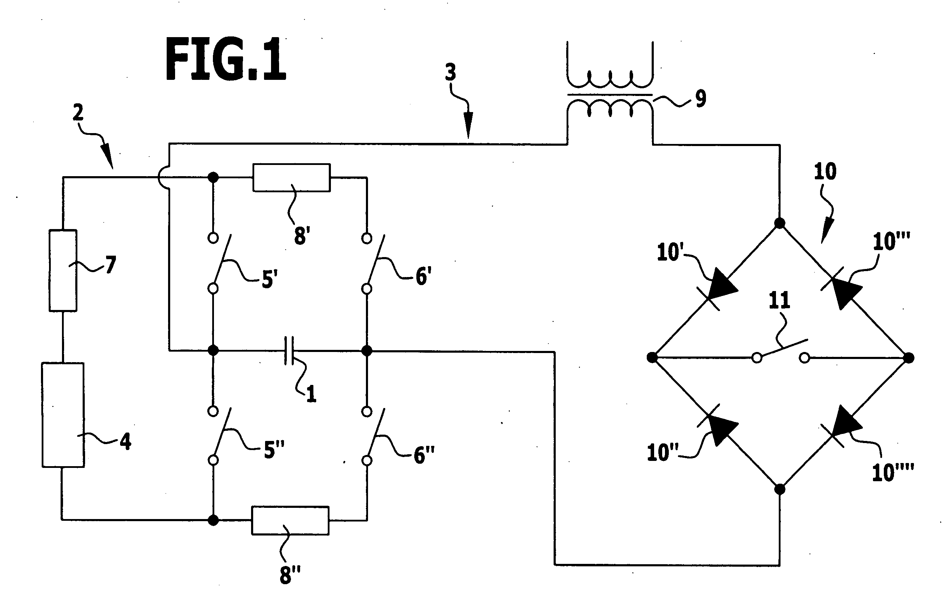

Der in Fig. 1 dargestellte Impulsgenerator besitzt eine Zündkapazität 1, die mittels einer Ladeschaltung 2 aufgeladen und mittels einer Entladeschaltung 3 unter Erzeugung eines Zündimpulses für eine Schweißanlage entladen werden kann, wie nachfolgend näher dargestellt wird.

Innerhalb der Ladeschaltung 2 ist die Zündkapazität 1 in einer H-Brückenschaltung angeordnet, die zwei zu einer Gleichstromquelle 4 parallele Reihenschaltungen mit jeweils zwei Halbleiterschaltern 5' und 5" bzw. 6' und 6" umfasst, wobei die Zündkapazität 1 jeweils zwischen den Halbleiterschaltern 5' und 5" bzw. 6' und 6" angeschlossen ist.

Zur Aufladung der Zündkapazität 1 werden je nach gewünschter Polarität der Aufladung entweder die Halbleiterschalter 5' und 6" bzw. die Halbleiterschalter 5" und 6' geschlossen.

Falls die Gleichstromquelle 4 nicht kurzschlusssicher ist und durch einen übermäßigen Ladestrom überlastet werden könnte, kann in Reihe zur Gleichstromquelle 4 ein Schutzwiderstand 7 angeordnet sein, um das maximale Maß des Ladestroms zu begrenzen. Anstelle des Widerstandes 7 können auch Schutzwiderstände 8' und 8" zwischen dem die Halbleiterschalter 5' und 5" bzw. 6' und 6" aufweisenden Reihenschaltungen vorgesehen sein.

In der Entladeschaltung 3 liegt die Zündkapazität 1 in Reihe zur Primärseite eines Impulsübertragers 9, dessen Sekundärseite in einem Schweißstromkreis angeordnet ist. Die Reihenschaltung aus Zündkapazität 1 und Primärseite des Impulsübertragers 9 ist mit den Eingängen einer durch Dioden 10' bis 10"" gebildeten vierpoligen Gleichrichterschaltung 10 verbunden, zwischen deren Ausgängen ein Halbleiterschalter 11 angeordnet ist. Wird dieser Halbleiterschalter 11 geschlossen, d.h. leitend geschaltet, wird die Zündkapazität 1 entladen, wobei der Halbleiterschalter 11 unabhängig von der Polarität der Aufladung der Zündkapazität 1 vom Entladestrom immer in gleicher Richtung durchsetzt wird, sodass sich der Halbleiterschalter 11 ohne weiteres mit der Flussrichtung des Entladestroms entsprechender Durchlassrichtung anordnen lässt. Der die Primärseite des Impulsübertragers 9 durchsetzende Entladestrom induziert auf der Sekundärseite des Impulsübertragers, der dazu mit entsprechendem Transformationsverhältnis ausgebildet ist, einen Hochspannungsimpuls, der zur Erzeugung eines Funkens zwischen Schweißelektrode und Werkstück und damit zur Zündung eines Lichtbogens zwischen Elektrode und Werkstück führt. Abweichend von der Darstellung der Fig. 1 kann die Primärseite des Impulsübertragers 9 auch an anderer Stelle im Entladekreis 3 in Reihe zur Zündkapazität 1 angeordnet sein, beispielsweise könnte die Primärseite auch zusammen mit der Zündkapazität 1 zwischen den beiden Reihenschaltungen der Halbleiterschalter 5' und 5" bzw. 6' und 6" angeordnet sein.

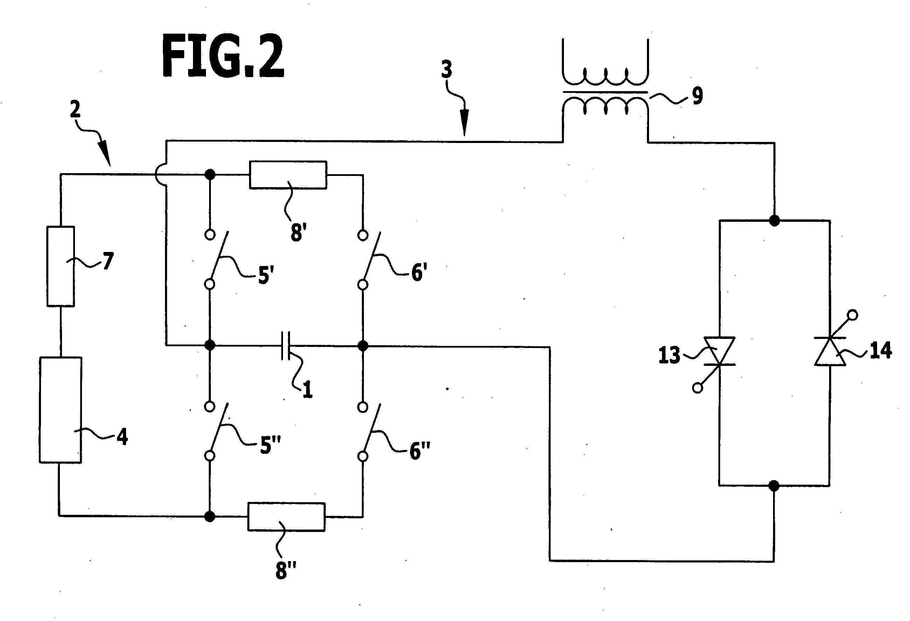

Die Ausführungsform nach Fig. 2 unterscheidet sich von der Ausführungsform nach Fig. 1 im Wesentlichen dadurch, dass die Gleichrichterschaltung 10 mit dem Halbleiterschalter 11 ersetzt ist durch zwei zueinander antiparallel angeordnete Halbleiterschalter 13 und 14. Zur Entladung der Zündkapazität 1 wird je nach deren Polarität entweder der eine oder andere der Halbleiterschalter 13 und 14 leitend geschaltet, und zwar in Abhängigkeit von der Polarität der Zündkapazität 1 immer derjenige Halbleiterschalter 13 oder 14, dessen Durchlassrichtung mit der Stromrichtung des auftretenden Entladestroms übereinstimmt.

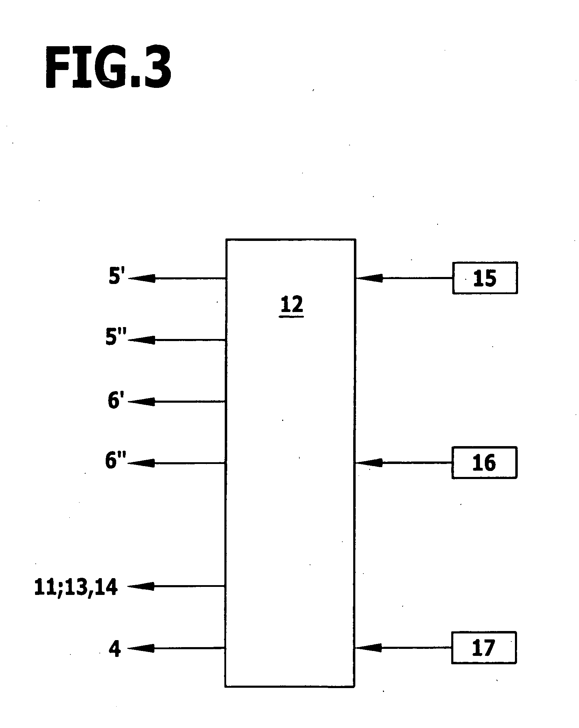

Die Halbleiterschalter 5' bis 6", 11, 13 und 14 werden gemäß Fig. 3 von einer Steuerschaltung 12 betätigt, die eingangsseitig mit einem beispielsweise an einem Schweißbrenner angeordneten manuell betätigbaren Befehlsgeber 15 und/oder mit einem Sensor 16 für den Ladezustand der Zündkapazität 1 und/oder einem Sensor 17 für den Betriebszustand der in den Fig. 1 bis 3 nicht dargestellten Schweißstromquelle verbunden ist.

Sobald der Befehlsgeber 15 betätigt wird, "merkt" die Steuerschaltung 12, dass vom Schweißer ein Zündimpuls gewünscht wird. Mittels des Sensors 16 erkennt die Steuerschaltung 12, ob die Zündkapazität 1 geladen ist und welches Maß die Spannung der Kapazität 1 hat. Aus den Signalen des Sensors 17 erkennt die Steuerschaltung 12 den Zustand des Schweißstromkreises, insbesondere die Richtung der Polarität zwischen Schweißelektrode und Werkstück. Aufgrund dieser Informationen kann die Steuerschaltung 12 die Gleichstromquelle 4 einschalten und nun durch Betätigung der Schalter 5' und 6" bzw. 5" und 6' eine Aufladung der Zündkapazität 1 mit zum Schweißprozess passender Polarität bewirken und sodann durch Betätigung eines der Schalter 11, 13 oder 14 die Entladung der Zündkapazität 1 und damit die Überkopplung eines Zündimpulses auf die Sekundärseite des Impulsübertragers 9 bewirken. Darüber hinaus hat die Steuerschaltung 12 auch Sicherungsfunktion: Falls die Zündkapazität 1 noch mit der einen Polarität aufgeladen ist, darf sie nicht ohne besondere Sicherungsmaßnahmen zur Aufladung mit der anderen Polarität mit der Gleichstromquelle 4 durch Betätigung der Schalter 5' und 6" bzw. 5" und 6' elektrisch verbunden werden. Denn in diesem Falle könnte eine Bauteilüberlastung auftreten. Deshalb ist vorgesehen, dass die Steuerschaltung 12 für die Schalter 5' bis 6" als Verriegelung wirkt und die genannten Schalter 5' bis 6" an einem Übergang in gefährliche Schaltzustände hindert.

Im Übrigen überwacht die Steuerschaltung 12 mittels des Sensors 16 bei Aufladung der Zündkapazität 1 deren Ladezustand. Sobald die Zündkapazität 1 eine vorgegebene elektrische Sollspannung erreicht, wird die Zündkapazität 1 mittels der Schalter 5' bis 6" von der Gleichstromquelle 4 elektrisch getrennt. Stattdessen ist es auch möglich, dass die Steuerschaltung 12 die Gleichstromquelle 4 abschaltet, sobald die Zündkapazität 1 die Sollspannung erreicht. In beiden Fällen wird also gewährleistet, dass die Zündkapazität 1 nicht weiter geladen wird. Schließlich kann die Steuerschaltung 12 den Impulsgenerator auch auf fehlerfreie Funktion überprüfen: Wenn beispielsweise die elektrische Spannung der Zündkapazität 1 bei Auslösung eines Zündimpulses übermäßig langsam abfällt, ist dies ein Hinweis darauf, dass in der Entladeschaltung 3 ein Fehler aufgetreten ist. Die Steuerschaltung kann den übermäßig langsamen Spannungsabfall der Zündkapazität 1 aus den Signalen des Sensors 16 ermitteln und eine entsprechende Fehlermeldung erzeugen. Darüber hinaus kann die Steuerschaltung 12 mittels des Sensors 16 auch eine ungewöhnlich schnelle Aufladung der Zündkapazität 1 aufgrund eines Fehlers in der Ladeschaltung 2 feststellen und wiederum ein entsprechendes Fehlersignal erzeugen.

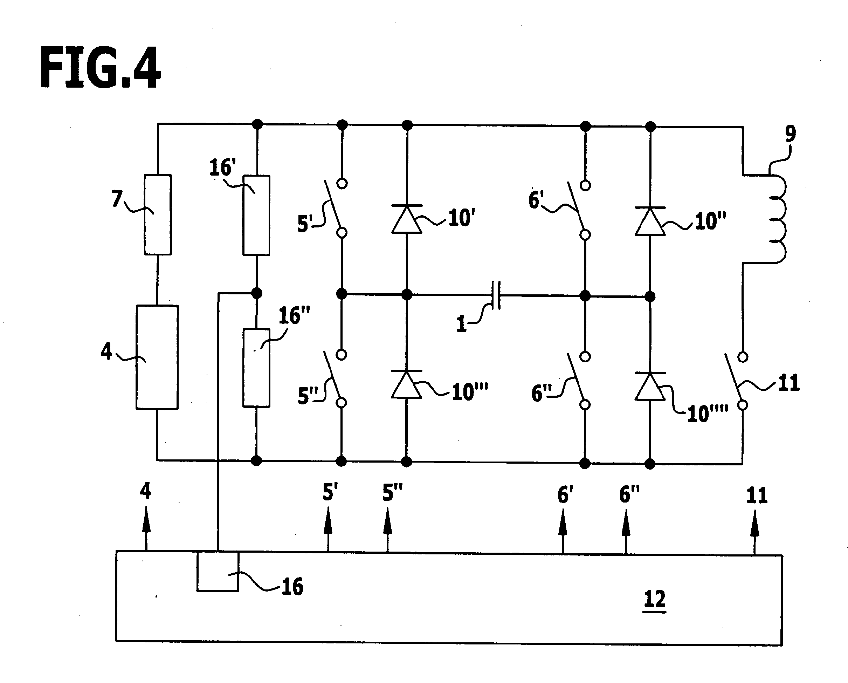

Die Ausführungsform der Fig. 4 stimmt weitestgehend mit der Ausführungsform der Fig. 1 überein. Gemäß Fig. 4 ist im Wesentlichen zusätzlich eine Reihenschaltung der Widerstände 16' und 16" vorgesehen, die elektrisch parallel zur Gleichstromquelle 4 und zur Zündkapazität 1 liegen. Die Widerstände 16' und 16" bilden dabei einen Spannungsteiler, derart, dass zwischen den beiden Widerständen 16' und 16" eine zur Ladespannung der Zündkapazität 1 analoge Spannung abgreifbar ist. Dementsprechend ist der Sensor 16 der Steuerschaltung 12 zwischen den Widerständen 16' und 16" angeschlossen, so dass die Steuerschaltung 12 in Abhängigkeit vom Ladezustand der Zündkapazität 1 die Gleichstromquelle 4, die Halbleiterschalter 5' und 5" sowie 6' und 6" und den Halbleiterschalter 11 betätigen bzw. steuern kann. Des Weiteren erleichtern die Widerstände 16' und 16" eine Umladung der Zündkapazität, falls diese ohne vorherige Entladung über den Impulsübertrager 9 und den Halbleiterschalter 11 auf eine Ladespannung mit entgegengesetzter Polarität aufgeladen werden soll. Vor der Aufladung auf die entgegengesetzte Polarität wird die Zündkapazität 1 zunächst über die Widerstände 16' und 16" (bei geöffnet bleibendem Halbleiterschalter 11) langsam entladen, bis der Sensor 16 eine Ladespannung nahe 0 meldet. Während dieser Entladezeit wird die Gleichstromquelle von der Steuerschaltung 12 ausgeschaltet gehalten. Zur Aufladung der Zündkapazität 1 mit der entgegengesetzten Polarität werden sodann von der Steuerschaltung 12 die Gleichstromquelle 4 wiederum eingeschaltet und die der gewünschten Polarität zugeordneten Halbleiterschalter 5' und 6" bzw. 6' und 5" geschlossen. Während dieser Aufladung der Zündkapazität 1 muss die Gleichstromquelle 4 zusätzlich einen durch die Widerstände 16' und 16" fließenden "Leckagestrom" liefern. Dieser ist jedoch deutlich kleiner als der von der Gleichstromquelle 4 gelieferte Ladestrom, d.h. die Widerstände 16' und 16" sind im Vergleich zur Leistung der Gleichstromquelle 4 hochohmig. Dementsprechend erfordern die Widerstände 16' und 16" keine größere Dimensionierung der Gleichstromquelle 4.

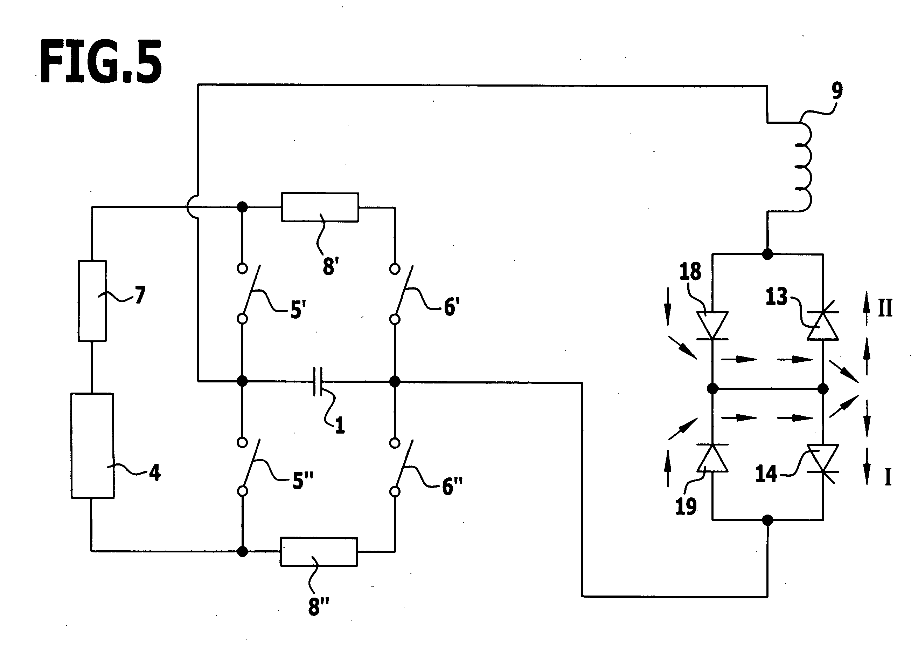

Die Fig. 5 zeigt eine Variante zur Ausführungsform der Fig. 2. Im Wesentlichen unterscheidet sich die Schaltung der Fig. 5 von der Schaltung der Fig. 2 dadurch, dass die Halbleiterschalter 13 und 14 mit zueinander entgegengesetzten Durchlassrichtungen in Reihe und parallel zu zwei in Reihe mit entgegengesetzten Durchlassrichtungen geschalteten Dioden 18 und 19 liegen, wobei die Verbindung zwischen den Halbleiterschaltern 13 und 14 mit der Verbindung zwischen den Dioden 18 und 19 verbunden ist. Damit kann der Entladestrom der Zündkapazität 1 je nach deren Polarität nur über den der jeweiligen Polarität zugeordneten Halbleiterschalter 13 bzw. 14 fließen, unabhängig davon, ob nur der "richtige" Haltleiterschalter 13 bzw. 14 oder beide Halbleiterschalter 13 und 14 geschlossen werden.

## Patentansprüche

1. Impulsgenerator für eine elektrische Schweißstromquelle, insbesondere zum WIG-Schweißen, mit einer Zündkapazität (1), die zur Aufladung über eine Ladeschaltung (2) mit einer Gleichstromquelle (4) verbindbar und über eine Entladeschaltung (3), in der die Zündkapazität (1) elektrisch in Reihe zur Primärseite eines sekundärseitig in den Schweißstromkreis der Schweißstromquelle eingebundenen Impulsübertragers (9) liegt, entladbar ist, **dadurch gekennzeichnet, dass** in der Ladeschaltung (2) angeordnete Schaltmittel (5' bis 6") die Polarität der Aufladung der Zündkapazität (1) willkürlich vorzugeben gestatten und die Entladeschaltung (3) den Entladestrom unabhängig von der Polarität der Aufladung der Zündkapazität (1) jeweils in vorgegebener Durchlassrichtung über einen einzigen zur Auslösung des Entladestroms schließenden Halbleiterschalter (11, 13, 14) führt.

2. Impulsgenerator nach Anspruch 1, **dadurch gekennzeichnet, dass** in der Entladeschaltung (3) zwei Halbleiterschalter (13, 14) parallel zueinander mit antiparallelen Durchlassrichtungen angeordnet sind.

3. Impulsgenerator nach Anspruch 1, **dadurch gekennzeichnet, dass** die Entladeschaltung (3) eine vierpolige Gleichrichterschaltung (10) aufweist, wobei die von der Zündkapazität (1) und der Primärseite des Impulsübertragers gebildete Reihenschaltung zwischen den Eingängen und der Halbleiterschalter (11) zwischen den Ausgängen der Gleichrichterschaltung angeordnet ist, wobei die Durchlassrichtung des Halbleiterschalters (11) der Polarität der Ausgänge entspricht.

4. Impulsgenerator nach einem der Ansprüche 1 bis 3, **dadurch gekennzeichnet, dass** die Ladeschaltung (2) als H-Brückenschaltung ausgebildet ist, wobei parallel zur Gleichstromquelle (4) zwei parallele Reihenschaltungen mit je einem ersten und einem zweiten Halbleiterschalter (5', 5"; 6', 6") angeordnet sind und die Zündkapazität (1) an beide Reihenschaltungen jeweils zwischen den beiden Halbleiterschaltern angeschlossen ist.

5. Impulsgenerator nach einem der Ansprüche 1 bis 4, **dadurch gekennzeichnet, dass** eine den bzw. die Halbleiterschalter (5' bis 6", 11, 13, 14) der Entladeschaltung und/oder der Ladeschaltung (2) betätigende Steuerschaltung (12) vorgesehen ist, die eingangsseitig mit einem manuell oder durch eine übergeordnete Steuerung betätigbaren Befehlsgeber (15) und/oder Sensoren (16, 17) für den Ladezustand der Zündkapazität (1) und/oder den Zustand des Schweißstromkreises verbunden ist.

6. Impulsgenerator nach Anspruch 5, **dadurch gekennzeichnet, dass** die Steuerschaltung (12) bezüglich der Halbleiterschalter (5' bis 6") der Ladeschaltung als Verriegelung gegen gefährliche Schaltzustände ausgebildet ist.

7. Impulsgenerator nach einem der Ansprüche 5 und 6, **dadurch gekennzeichnet, dass** die Steuerschaltung (12) Fehlersignale erzeugt, wenn aus den Signalen des den Ladezustand der Zündkapazität erfassenden Sensors (16) eine übermäßig schnelle und/oder langsame Aufladung bzw. eine langsame Entladung der Zündkapazität (1) ermittelbar ist.

8. Impulsgenerator nach einem der Ansprüche 5 bis 7, **dadurch gekennzeichnet, dass** die Steuerschaltung (12) die Gleichstromquelle (4) steuert.

9. Impulsgenerator nach einem der Ansprüche 1 bis 8, **dadurch gekennzeichnet, dass** parallel zur Gleichstromquelle eine Reihenschaltung von Widerständen (16', 16") angeordnet und zwischen diesen Widerständen ein Sensor (16) einer Steuerschaltung (12) angeschlossen ist, welche die Sensorsignale als Information über den Ladezustand der Zündkapazität (1) auswertet und in Abhängigkeit davon die Gleichstromquelle (4) und/oder die Haltleiterschalter (51, 511, 61, 611, 11, 13, 14) steuert.

## Claims

1. Pulse generator for an electric welding current source, in particular, for WIG welding, comprising an ignition capacitor (1), which is connectable via a charging circuit (2) to a direct current source (4) for charging, and is dischargeable via a discharging circuit (3) in which the ignition capacitor (1) is electrically connected in series to the primary side of a pulse transformer (9) integrated on the secondary side into the welding current circuit of the welding current source, **characterized in that** switch means (5' to 6") arranged in the charging circuit (2) allow the polarity of the charging of the ignition capacitor (1) to be prescribed arbitrarily, and the discharging circuit (3) respectively conducts the discharging current independently of the polarity of the charging of the ignition capacitor (1) in a prescribed forward direction via a single semiconductor switch (11, 13, 14) which closes in order to trigger the discharging current.

2. Pulse generator in accordance with claim 1, **characterized in that** two semiconductor switches (13, 14) are arranged parallel to each other with anti-parallel forward directions in the discharging circuit (3).

3. Pulse generator in accordance with claim 1, **characterized in that** the discharging circuit (3) comprises a four-pole rectifier circuit (10), the series circuit formed by the ignition capacitor (1) and the primary side of the pulse transformer being arranged between the inputs and the semiconductor switch (11) between the outputs of the rectifier circuit, and the forward direction of the semiconductor switch (11) corresponding to the polarity of the outputs.

4. Pulse generator in accordance with any one of claims 1 to 3, **characterized in that** the charging circuit (2) is configured as an H-bridge circuit, two parallel series circuits each with a first and a second semiconductor switch (5', 5"; 6', 6") being arranged parallel to the direct current source (4), and the ignition capacitor (1) being connected to both series circuits, in each case between the two semiconductor switches.

5. Pulse generator in accordance with any one of claims 1 to 4, **characterized in that** there is provided for actuating the semiconductor switch or switches (5' to 6", 11, 13, 14) of the discharging circuit and/or of the charging circuit (2) a control circuit (12), which is connected at the input side to a command transmitter (15) which is actuatable manually or by a superordinate control and/or to sensors (16, 17) for the charging state of the ignition capacitor (1) and/or the state of the welding current circuit.

6. Pulse generator in accordance with claim 5, **characterized in that** the control circuit (12) is configured as a lock for the semiconductor switches (5' to 6") of the charging circuit to protect them against dangerous switching states.

7. Pulse generator in accordance with any one of claims 5 and 6, **characterized in that** the control circuit (12) generates error signals if an excessively rapid and/or slow charging or a slow discharging of the ignition capacitor (1) is detectable from the signals of the sensor (16) detecting the charging state of the ignition capacitor.

8. Pulse generator in accordance with any one of claims 5 to 7, **characterized in that** the control circuit (12) controls the direct current source (4).

9. Pulse generator in accordance with any one of claims 1 to 8, **characterized in that** there is arranged parallel to the direct current source a series circuit of resistors (16', 16") and connected between these resistors is a sensor (16) of a control circuit (12), which evaluates the sensor signals as information on the charging state of the ignition capacitor (1) and controls the direct current source (4) and/or the semiconductor switches (51, 511, 61, 611, 11, 13, 14) in dependence upon this.

## Revendications

1. Générateur d'impulsions pour une source de courant électrique de soudage, en particulier un soudage TIG, comportant une capacité d'allumage (1) qui peut être reliée à une source de courant continu (4) en vue d'une charge par l'intermédiaire d'un circuit de charge (2) et peut être déchargée par l'intermédiaire d'un circuit de décharge (3), dans lequel la capacité d'allumage (1) se trouve électriquement en série sur le côté primaire d'un transmetteur d'impulsions (9) relié sur le côté secondaire dans le circuit de courant de soudage de la source de courant de soudage, **caractérisé en ce que** des moyens de commutation (5' à 6") disposés dans le circuit de charge (2) permettent de définir arbitrairement la polarité de la charge de la capacité d'allumage (1) et le circuit de décharge (3) conduit le courant de décharge indépendamment de la polarité de la charge de la capacité d'allumage (1) respectivement dans la direction de passage prédéterminée par l'intermédiaire d'un seul commutateur à semi-conducteurs (11, 13, 14) se fermant pour déclencher le courant de décharge.

2. Générateur d'impulsions selon la revendication 1, **caractérisé en ce que** dans le circuit de décharge (3) sont disposés deux commutateurs à semi-conducteurs (13, 14) parallèles l'un à l'autre avec des directions de passage anti-parallèles.

3. Générateur d'impulsions selon la revendication 1, **caractérisé en ce que** le circuit de décharge (3) présente un circuit redresseur quadripolaire (10), dans lequel le montage en série formé par la capacité d'allumage (1) et le côté primaire du transmetteur d'impulsions est disposé entre les entrées et le circuit à semi-conducteurs (11) entre les sorties du circuit redresseur, dans lequel la direction de passage du circuit à semi-conducteurs (11) correspond à la polarité des sorties.

4. Générateur d'impulsions selon l'une des revendications 1 à 3, **caractérisé en ce que** le circuit de charge (2) est réalisé sous la forme d'un circuit à pont en H, dans lequel deux circuits série parallèles comportant chacun un premier et un second commutateur à semi-conducteurs (5', 5" ; 6', 6") sont disposés parallèlement à la source de courant continu (4) et la capacité d'allumage (1) est reliée aux deux circuits série respectivement entre les deux commutateurs à semi-conducteurs.

5. Générateur d'impulsions selon l'une des revendications 1 à 4, **caractérisé en ce qu'**un circuit de commande (12) commandant le ou les commutateurs à semi-conducteurs (5' à 6", 11, 13, 14) du circuit de décharge et/ou du circuit de charge (2) est prévu, qui est relié côté entrée à une télécommande (15) pouvant être commandée manuellement ou par une commande principale et/ou des capteurs (16, 17) pour l'état de charge de la capacité d'allumage (1) et/ou l'état du circuit de courant de soudage.

6. Générateur d'impulsions selon la revendication 5, **caractérisé en ce que** le circuit de commande (12) est réalisé comme verrouillage contre les états de commutation dangereux en ce qui concerne le commutateur à semi-conducteurs (5' à 6") du circuit de charge.

7. Générateur d'impulsions selon l'une des revendications 5 et 6, **caractérisé en ce que** le circuit de commande (12) génère des signaux d'erreur, lorsqu'une charge extrêmement rapide et/ou lente ou une décharge lente de la capacité d'allumage (1) est détectée à partir des signaux du capteur (16) détectant l'état de charge de la capacité d'allumage.

8. Générateur d'impulsions selon l'une des revendications 5 à 7, **caractérisé en ce que** le circuit de commande (12) commande la source de courant continu (4).

9. Générateur d'impulsions selon l'une des revendications 1 à 8, **caractérisé en ce qu'**un montage série de résistances (16', 16") est disposé parallèle à la source de courant continu et entre ces résistances, un capteur (16) d'un circuit de commande (12) est relié, qui évalue les signaux du capteur en tant qu'information concernant l'état de charge de la capacité d'allumage (1) et en fonction de ceux-ci, commande la source de courant continu (4) et/ou les commutateurs à semi-conducteurs (51, 511, 61, 611, 11, 13, 14).
